# EUROPÄISCHE PATENTSCHRIFT

(11) **EP 4 176 706 B1**
(45) Veröffentlichungstag und Bekanntmachung des Hinweises auf die Patenterteilung: **16.07.2025**
(21) Anmeldenummer: 22204280.6
(22) Anmeldetag: 28.10.2022
(51) Int. Cl.: A01F 29/06, A01F 29/09

(54) **HÄCKSELMESSER EINES FELDHÄCKSLERS UND VERFAHREN ZUM HERSTELLEN DESSELBEN**
CUTTER BLADE FOR A CHAFF CUTTER AND METHOD FOR PRODUCING THE SAME
LAME DE HACHAGE D'UNE RÉCOLTEUSE-HACHEUSE ET PROCÉDÉ POUR SA FABRICATION

(30) Priorität: 05.11.2021 DE 102021128822
(43) Veröffentlichungstag der Anmeldung: 10.05.2023
(73) Patentinhaber: CLAAS Saulgau GmbH, 88348 Bad Saulgau (DE)
(72) Erfinder: Stengele, Martin, 88605 Sauldorf (DE); Spachtholz, Christian, 88370 Ebenweiler (DE)

(56) Entgegenhaltungen:
- EP-A1- 3 329 765
- DE-U1- 8 813 953
- US-A1- 2014 311 114
- US-B2- 8 146 849

## Beschreibung

Die Erfindung betrifft ein Häckselmesser eines Feldhäckslers. Ferner betrifft die Erfindung ein Verfahren zum Herstellen eines Häckselmessers eines Feldhäckslers.

US 2014/311 114 A1 betrifft eine drehbare Messertrommel mit Messerhaltern zum Anbringen von Messern, wobei jeder Messerhalter ein vorderes und ein hinteres Element sowie einen Messerverbindungsabschnitt umfasst. Das hintere Element erstreckt sich von dem Verbindungsabschnitt in Richtung der Drehachse der Trommel und hat ein Verlängerungselement, das sich in Umfangsrichtung der Drehachse in einer Richtung entgegengesetzt zur Drehrichtung der Trommel erstreckt. Das vordere Element erstreckt sich von dem Verbindungsabschnitt in Richtung der Trommeldrehachse und stößt an das Verlängerungselement eines benachbarten Messerhalters, der in der Drehrichtung der Trommel davor angeordnet ist.

US 8 146 849 B2 offenbart eine Häckseltrommel für einen Feldhäcksler mit einer Welle, auf der in axialer Richtung nebeneinander liegende und in radialer Richtung verlaufende Tragringe angebracht sind, wobei auf dem Außenumfang der Tragringe Messerhalter mit, mit ersten Schrauben daran befestigten, Häckselmessern angeordnet sind und wobei die ersten Schrauben eine Verbindung zwischen den in Umfangsrichtung aufeinander folgenden Messerhaltern herstellen.

Aus DE 88 13 953 U1 ist eine Messertrommel eines Feldhäckslers mit mehreren auf einer Achse aufgesetzten Trommelböden bekannt, wobei zumindest zwei nebeneinanderliegende: Trommelböden von mehreren am Umfang gleichmäßig verteilten Messerhaltern miteinander verbunden sind, mit je einer die Messer vollflächig abstützenden Auflagefläche, wobei jedem Messerhalter eine Gutleitfläche zugeordnet ist, und jeder Messerhalter aus einem massiven Walzprofil mit angearbeiteter Gutleitfläche besteht.

EP 3 329 765 A1 offenbart ein Häckselmesser eines Feldhäckslers mit einem Grundkörper und mit mindestens einem an dem Grundkörper befestigten Gutleitelement. Der Grundkörper verfügt über einen Befestigungsabschnitt zur Befestigung des Häckselmessers an einer Häckseltrommel und über einen gegenüber dem Befestigungsabschnitt abgewinkelten Schneidabschnitt für das zu häckselnde Erntegut. Das jeweilige Gutleitelement ist an dem Befestigungsabschnitt des Grundkörpers befestigt und dient der Führung von gehäckseltem Erntegut. Eine Führungsfläche des Gutleitelements weist eine gekrümmte Kontur auf. Die gekrümmte Kontur des Gutleitelements beginnt mit einem Abstand zu einer Übergangskante zwischen dem Befestigungsabschnitt und dem Schneidabschnitt des Grundkörpers. Das aus EP 3 329 765 A1 bekannte Häckselmesser ist im Hinblick auf eine Befestigung desselben der Häckseltrommel ausgelegt. Dadurch ergeben sich Probleme bei der Führung des gehäckselten Ernteguts. Es besteht Bedarf an einem Häckselmesser, welches das gehäckselte Erntegut optimal leitet bzw. führt.

Hiervon ausgehend liegt der vorliegenden Erfindung die Aufgabe zugrunde, ein neuartiges Häckselmesser eines Feldhäckslers und ein Verfahren zum Herstellen des Häckselmessers zu schaffen.

Diese Aufgabe wird durch ein Häckselmesser eines Feldhäckslers nach Anspruch 1 gelöst.

Erfindungsgemäß beträgt der Abstand zwischen dem Beginn der Führungsfläche des jeweiligen Gutleitelements und der Übergangskante zwischen dem Befestigungsabschnitt und dem Schneidabschnitt des Grundkörpers zwischen 4 mm und 8 mm.

Die Führungsfläche des jeweiligen Gutleitelements verläuft erfindungsgemäß in einem ersten Abschnitt des Gutleitelements, der sich an den Beginn der Führungsfläche anschließt, mit einer Länge zwischen 4 mm und 8 mm geradlinig, wobei der erste Abschnitt des jeweiligen Gutleitelements mit dem Befestigungsabschnitt des Grundkörpers einen Winkel zwischen 18° und 22° einschließt.

Der erste Abschnitt des jeweiligen Gutleitelements geht erfindungsgemäß in einen konkav gewölbten zweiten Abschnitt über, dessen Krümmungsradius zwischen 21 mm und 25 mm beträgt und der einen Umschlingungswinkel zwischen 29° und 33° aufweist.

Der zweite Abschnitt des jeweiligen Gutleitelements geht erfindungsgemäß in einen konkav gewölbten dritten Abschnitt über, dessen Krümmungsradius zwischen 18 mm und 22 mm beträgt und der eine Umschlingungswinkel zwischen 24° und 28° aufweist.

Der dritte Abschnitt des jeweiligen Gutleitelements geht erfindungsgemäß in einen konvex gewölbten vierten Abschnitt über.

Eine maximale Höhe des jeweiligen Gutleitelements zum Befestigungsabschnitt des Grundkörpers beträgt erfindungsgemäß zwischen 24 mm und 30 mm. Vorzugsweise geht der vierte Abschnitt des Gutleitelements in einen fünften Abschnitt über, der die maximale Höhe des Gutleitelements definiert.

Der Abstand zwischen dem Beginn der Führungsfläche des jeweiligen Gutleitelements und der Übergangskante des Grundkörpers, die Länge des ersten Abschnitts der Führungsfläche des jeweiligen Gutleitelements, die Krümmungsradien und Umschlingungswinkel der konkav gewölbten zweiten und dritten Abschnitte der Führungsfläche des jeweiligen Gutleitelements, der konvex gewölbte vierte Abschnitt sowie die Höhe des jeweiligen Gutleitelements vom Befestigungsabschnitt des Grundkörpers aus gemessen, erlauben in Kombination miteinander eine optimale Führung des gehäckselten Ernteguts. Durch die optimale Führung und Umlenkung des gehäckselten Ernteguts kann im Förderprozess Energie eingespart werden, da die Umlenkung des gehäckselten Ernteguts mit geringer Beschleunigungsarbeit verbunden ist.

Ferner wird durch die obige Merkmalskombination das Erntegut in einem definierten Bereich einer Umdrehung der Häckseltrommel umgelenkt, wodurch der Umlauf des Ernteguts im Bereich der Häckseltrommel reduziert wird.

Die obige Merkmalskombination ist demnach strömungstechnisch optimiert und reduziert den für den Erntegutfluss benötigten Energiebedarf. Die Erntegutförderung erfolgt mit hoher Effizienz für verschiedenste Erntegüter, Schnittlängen und Durchsatzleistungen.

Vorzugsweise weist der vierte Abschnitt des jeweiligen Gutleitelements einen Krümmungsradius zwischen 5 mm und 7 mm auf, wobei der fünfte Abschnitt der des jeweiligen Gutleitelements parallel zum Befestigungsabschnitt verläuft. Dies dient der weiteren Optimierung der Erntegutführung.

Vorzugsweise geht der fünfte Abschnitt des jeweiligen Gutleitelements in einen geradlinig verlaufenden sechsten Abschnitt über, der mit dem Befestigungsabschnitt einen Winkel zwischen 23° und 27° einschließt. Auch hiermit kann die Erntegutführung weiter optimiert werden.

Vorzugsweise ist das jeweilige Gutleitelement durch sich an den sechsten Abschnitt anschließende Abschnitte geschlossen. Dadurch wird vorteilhaft verhindert, dass sich Erntegut an der rückliegenden Messerkante ablagert. Ablagerungen können zur Unwucht führen. Auch dieses Merkmal dient somit der weiteren Optimierung der Erntegutführung.

Das jeweilige Gutleitelement ist ein Rollprofilierungs-Element. Bei der Rollprofilierung erfolgt eine Oberflächenverfestigung, wodurch eine erhöhte Härte für das jeweilige Gutleitelement bereitgestellt werden kann. Hierdurch kann die Verschleißanfälligkeit desselben reduziert werden.

Vorzugsweise trägt der erste Abschnitt, der zweite Abschnitt und der dritte Abschnitt des jeweiligen Gutleitelements eine Verschleißschutzbeschichtung. Auch hiermit kann die Verschleißanfälligkeit des jeweiligen Gutleitelements reduziert werden.

Das Verfahren zum Herstellen des Häckselmessers ist in Anspruch 10 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: einen Querschnitt durch ein erfindungsgemäßes Häckselmesser;
- Fig. 2: den Querschnitt der Fig. 1 mit geometrischen Größen;
- Fig. 3: einen Ausschnitt aus Fig. 2;
- Fig. 4: den Ausschnitt der Fig. 3 zusammen mit Gutflusspfeilen;
- Fig. 5: den Ausschnitt der Fig. 3 zusammen mit weiteren Gutflusspfeilen;
- Fig. 6: den Ausschnitt der Fig. 3 zusammen mit weiteren Gutflusspfeilen;
- Fig. 7: den Ausschnitt der Fig. 3 zusammen mit weiteren Gutflusspfeilen;
- Fig. 8: einen weiteren Ausschnitt aus Fig. 2; und

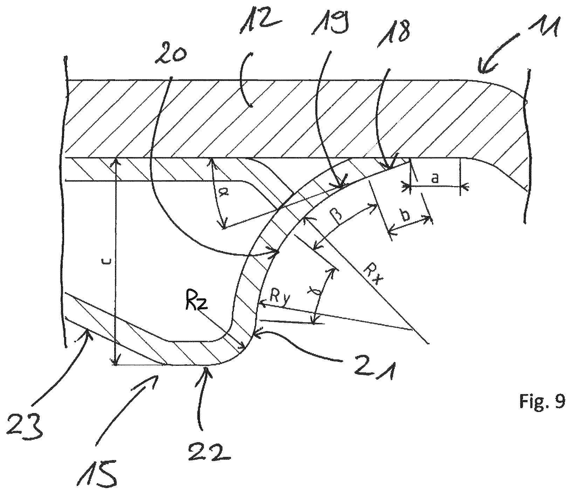

- Fig. 9: einen weiteren Ausschnitt aus Fig. 2.

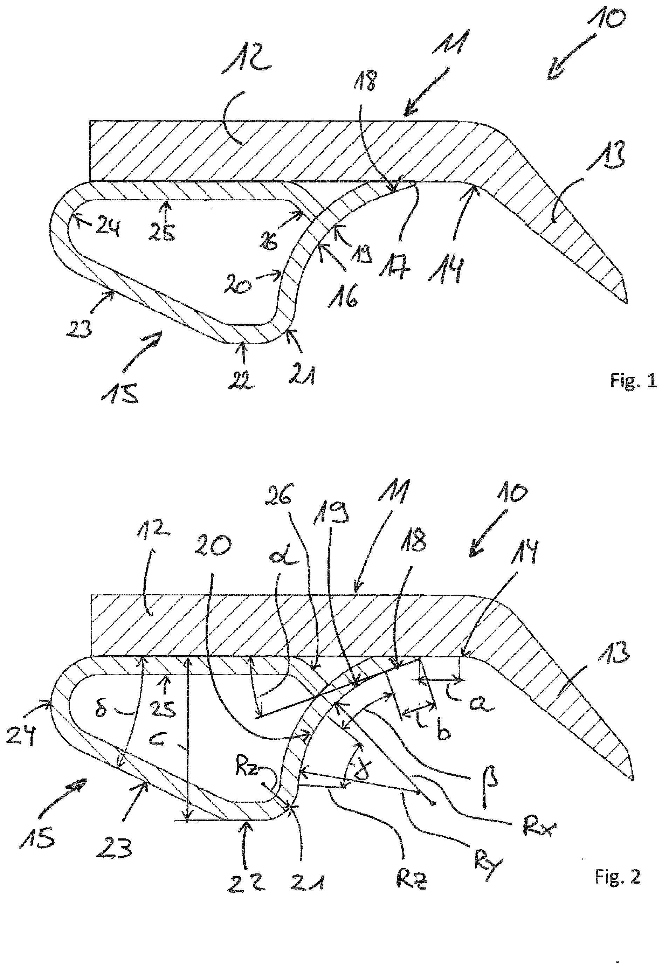

Fig. 1 zeigt einen Querschnitt durch ein erfindungsgemäßes Häckselmesser 10. Das erfindungsgemäße Häckselmesser 10 verfügt über einen Grundkörper 11 und mindestens ein Gutleitelement 15.

Der Grundkörper 11 des Häckselmessers 10 weist einen Befestigungsabschnitt 12 zur Befestigung des Häckselmessers 10 an einer nicht gezeigten Häckseltrommel und einen gegenüber dem Befestigungsabschnitt 12 abgewinkelten Schneidabschnitt 13 zum Schneiden des zu häckselnden Ernteguts auf.

Der Schneidabschnitt 13 des Grundkörpers 11 des Häckselmessers 10 ist gegenüber dem Befestigungsabschnitt 12 des Grundkörpers 11 abgewinkelt.

Zwischen dem Befestigungsabschnitt 12 und dem Schneidabschnitt 13 des Grundkörpers 11 des Häckselmessers 10 ist eine Übergangskante 14 in Form einer Biegekante ausgebildet.

Wie bereits ausgeführt, ist das Häckselmesser 10 über den Befestigungsabschnitt 12 an einer nicht gezeigten Häckseltrommel befestigbar. Hierzu sind in den Befestigungsabschnitt 12 nicht gezeigte, vorzugsweise als Langlöcher ausgebildete Befestigungselemente eingebracht, über die das Häckselmesser 10, nämlich der Grundkörper 11 desselben, an der Häckseltrommel befestigt werden kann.

An dem Befestigungsabschnitt 12 des Grundkörpers 11 ist mindestens ein Gutleitelement 15 befestigt. Das Gutleitelement 15 verfügt über eine Führungsfläche 16 für gehäckseltes Erntegut, wobei die Führungsfläche 16 zumindest abschnittsweise eine gekrümmte Kontur aufweist. Die Führungsfläche 16 ist dabei abschnittsweise konkav nach innen gewölbt.

Die Führungsfläche 16 des Gutleitelements 15 weist eine vordere Kante 17 auf, mit welcher die Führungsfläche 16 beginnt. Diese Kante 17 der Führungsfläche 16 des Gutleitelements 15 weist einen Abstand a zur Übergangskante 14 zwischen dem Befestigungsabschnitt 12 und dem Schneidabschnitt 13 des Grundkörpers 11 auf.

Erfindungsgemäß beträgt der Abstand a zwischen dem Beginn der Führungsfläche 16 des Gutleitelements 15, also der Kante 17, und der Übergangskante 14 zwischen dem Befestigungsabschnitt 12 und dem Schneidabschnitt 13 des Grundkörpers 11 zwischen 4 mm und 8 mm, also 6 mm ± 2 mm.

Die Führungsfläche 16 des Gutleitelements 15 verläuft erfindungsgemäß in einem sich an die Kante 17 anschließenden ersten Abschnitt 18 geradlinig, und zwar entlang einer Länge b, die zwischen 4 mm und 8 mm, also 6 mm ± 2 mm, beträgt.

Dieser erste Abschnitt 18 des Gutleitelements 15 schließt mit dem Befestigungsabschnitt 12 des Grundkörpers 11 einen Winkel α zwischen 18° und 22° ein, also 20° ± 2°.

Dieser erste Abschnitt 18 der Führungsfläche 16 des Gutleitelements 15 geht erfindungsgemäß in einen konkav gewölbten zweiten Abschnitt 19 über, und zwar stetig und damit tangential, wobei der zweite Abschnitt 19 einen Krümmungsradius Rx zwischen 21 mm und 25 mm, also 23 mm ± 2 mm, und einen Umschlingungswinkel β zwischen 29° und 33°, also 31° ± 2°, aufweist.

Dieser zweite Abschnitt 19 der Führungsfläche 16 des Gutleitelements 15 geht erfindungsgemäß in einen konkav gewölbten dritten Abschnitt 20 über, und zwar wiederum stetig oder tangential, wobei der konkav gewölbte dritte Abschnitt 20 einen Krümmungsradius Ry zwischen 18 mm und 22 mm, also 20 mm ± 2 mm, und einen Umschlingungswinkel γ zwischen 24° und 28°, also 26° ± 2°, aufweist.

Der Krümmungsradius Rx des konkav gewölbten zweiten Abschnitts 19 der Führungsfläche 16 des Gutleitelements 15 ist größer als der Krümmungsradius Ry des konkav gewölbten dritten Abschnitts 20 der Führungsfläche 16 des Gutleitelements.

Ferner ist der Umschlingungswinkel β des konkav gewölbten zweiten Abschnitts 19 größer als der Umschlingungswinkel γ des konkav gewölbten dritten Abschnitts 20.

Der konkav gewölbte dritte Abschnitt 20 der Führungsfläche 16 des Gutleitelements 15 geht erfindungsgemäß in einen konvex gewölbten vierten Abschnitt 21 über, wobei dieser vierte Abschnitt 21 des Gutleitelements 15 vorzugsweise in einen fünften Abschnitt 22 übergeht, der vorzugsweise die maximale Höhe c des Gutleitelements 15 - vom Befestigungsabschnitt 12 des Grundkörpers 11 aus gemessen - bestimmt.

Diese maximale Höhe c des Gutleitelements 15 beträgt erfindungsgemäß zwischen 24 mm und 30 mm, also 27 mm ± 3 mm.

Die obigen Parameter des Häckselmessers 10 ermöglichen eine optimale Gutflussführung des Ernteguts. Das Erntegut wird mit geringer Beschleunigungsarbeit geführt, wodurch für den Förderprozess Energie eingespart werden kann. Der Umlauf des Ernteguts, also diejenige Zeit, welche das Erntegut am Häckselmesser 10 im Bereich des jeweiligen Gutleitelements 15 und damit innerhalb der Häckseltrommel geführt wird, kann reduziert werden. Die Führung des Ernteguts kann für verschiedenste Erntegüter, Schnittlängen und Durchsatzleistungen durch die obigen geometrischen Größen auf ideale Art und Weise erfolgen.

Der vierte Abschnitt 21 des Gutflusselements 15 verfügt vorzugsweise über einen Krümmungsradius Rz zwischen 5 mm und 7 mm, also 6 mm ± 1 mm. Auch dies dient der optimalen Führung des Ernteguts.

Der fünfte Abschnitt 22 des Gutleitelements 15 geht in einen geradlinig verlaufenden sechsten Abschnitt 23 vorzugsweise stetig bzw. tangential, wobei dieser sechste Abschnitt 23 mit dem Befestigungsabschnitt 12 des Grundkörpers 11 einen Winkel δ zwischen 23° und 27°, also 25° ± 2°, einschließt. Auch dies ist im Hinblick auf eine optimale Erntegutführung von Vorteil.

Das Gutleitelement 15 ist durch sich an den sechsten Abschnitt 23 anschließende Abschnitte 24, 25 und 26 geschlossen ausgeführt. So geht der sechste Abschnitt 23 des Gutleitelements 15 in einen konvex gekrümmten siebten Abschnitt 24 und der siebte Abschnitt 24 in einen geradlinig verlaufenden achten Abschnitt 25 über, der an den Befestigungsabschnitt 12 des Grundkörpers 11 angrenzt und über welchen das jeweilige Gutleitelement 15 vorzugsweise mit dem Befestigungsabschnitt 12 des Grundkörpers 11 verbunden ist.

Dieser achte Abschnitt 25 geht in einen neunten Abschnitt 26 über, der mit seinem von dem achten Abschnitt 25 abgewandten Ende den zweiten Abschnitt 19 der Führungsfläche 16 des Gutleitelements 15 kontaktiert.

Der neunte Abschnitt 26 und der zweite Abschnitt 19 des Gutleitelements 15 sind dabei vorzugsweise durch Verschweißen stoffschlüssig miteinander verbunden. Diese Schweißverbindung ist dabei vorzugsweise über Laserschweißen ausgebildet.

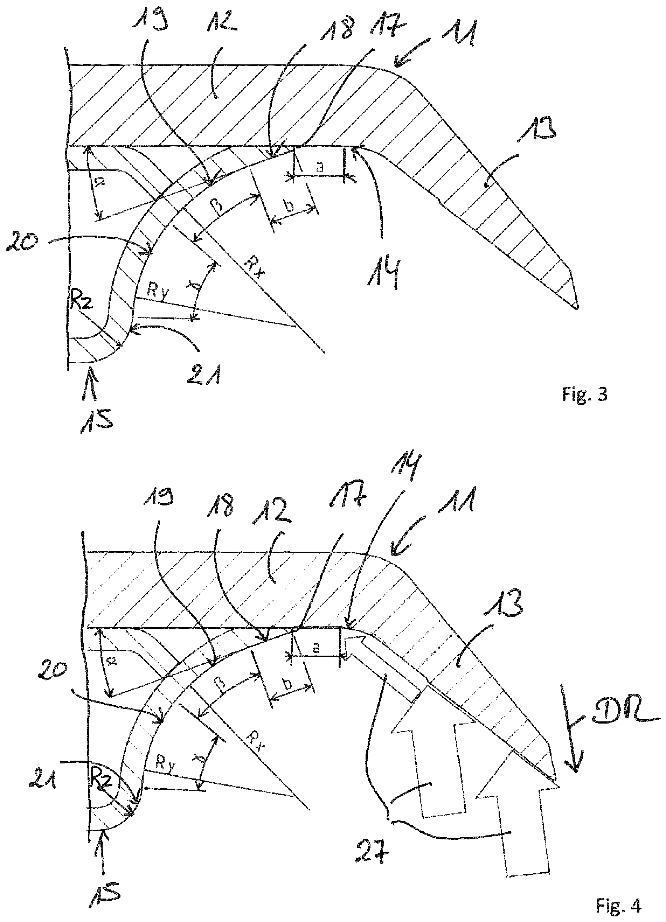

Fig. 4 visualisiert die vorteilhafte Wirkung des Abstandsmaßes a zwischen der Kante 17 der Führungsfläche 16 des Gutleitelements 15 und der Übergangskante 14 des Grundkörpers 11 für die Führung des Ernteguts anhand der Pfeile 27. Die erste Umlenkung des gehäckselten Ernteguts erfolgt im Übergangsbereich zwischen dem Schneidabschnitt 13 und dem Befestigungsabschnitt 12 des Grundkörpers 11. Dies ist sowohl im Hinblick auf die Erntegutführung als auch im Hinblick auf eine Verschleißreduzierung von Vorteil.

Auch bei einem verschlissenen Schneidabschnitt 13 und längeren Schnittlängen schlägt das gehäckselte Erntegut nicht auf das Gutflusselement 15 auf. Der Abstand a ist dabei so gewählt, dass das gehäckselte Erntegut nicht zu weit in einen sogenannten Flugkreis der Häckseltrommel gefördert wird.

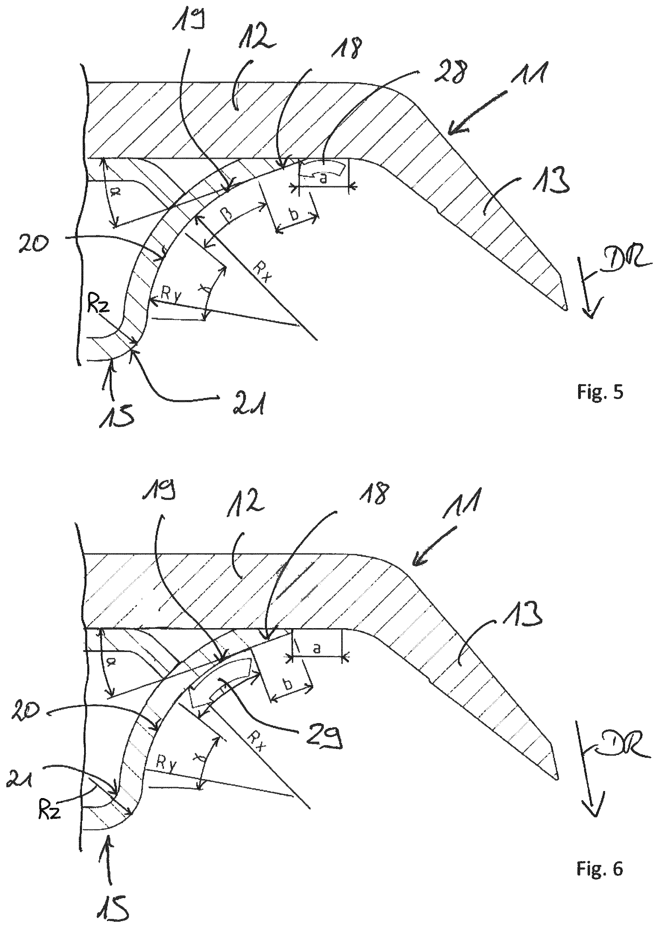

Fig. 5 visualisiert mit einem Pfeil 28 die Führung des geschnittenen Ernteguts beim Übergang in den ersten Abschnitt 18 der Führungsfläche 16 des Gutleitelements 15. Durch den relativ flachen Winkel α erfolgt eine weitere Umlenkung des geschnittenen Ernteguts auf das Gutflusselement 15, wobei gemäß Fig. 6 im Sinne des Pfeils 29 das Erntegut anschließend in den zweiten Abschnitt 19 der Führungsfläche 16 des Gutleitelements 15 gelangt. Durch den konkav gewölbten Abschnitt 19 erfolgt eine weitere Umlenkung des gehäckselten Ernteguts in Drehrichtung DR der Häckseltrommel, wobei das gehäckselte Gutleitelement 15 das Erntegut in Drehrichtung DR der Häckseltrommel beschleunigt.

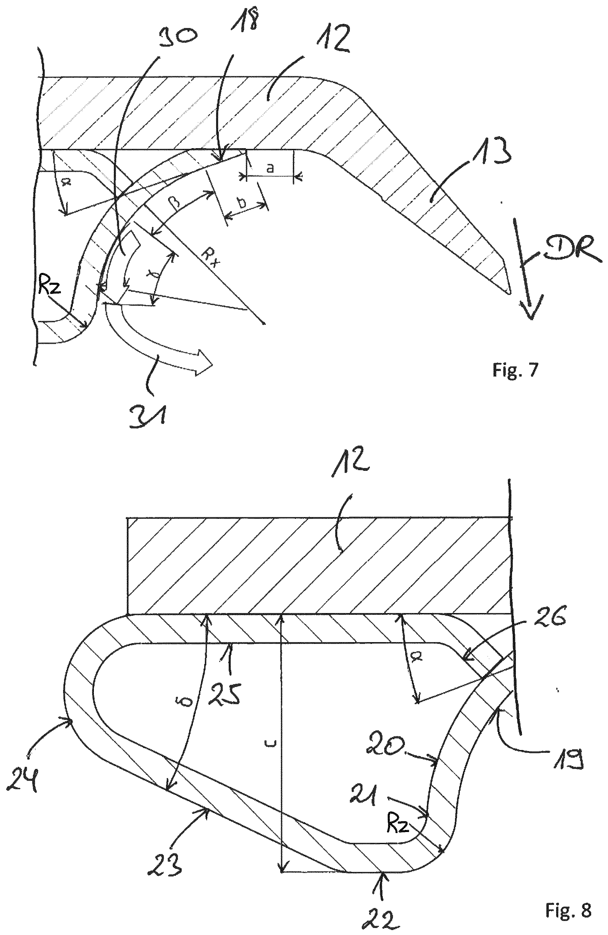

Nachfolgend gelangt gemäß Fig. 7 im Sinne der Pfeile 30 und 31 das gehäckselte Erntegut zunächst in den dritten Abschnitt 20 der Führungsfläche 16 des Gutleitelements 15, wobei durch den reduzierten Radius Ry des dritten Abschnitts 20 eine weitere Umlenkung des geschnittenen Ernteguts in Drehrichtung DR erfolgt. Im Sinne des Pfeils 31 verlässt das gehäckselte Erntegut aufgrund der Drehbeschleunigung durch die Zentrifugalkraft den Trommelflugkreis.

Der Radius Rz des vierten Abschnitts 21 ist gegenläufig und verhindert, dass sich Reste des gehäckselten Ernteguts in diesem Bereich ablagern.

Das Gutleitelement 15 verhindert, dass das gehäckselte Erntegut an der Innenseite des Häckselmessers 10 zu weit in den Trommelflugkreis eindringt. Dies würde zu einer verspäteten Abgabe des Ernteguts und damit zu einem verlängerten Umlauf des Ernteguts führen. Es kann verhindert werden, dass das Erntegut innerhalb des Trommelgehäuses rotiert. Letztendlich wird der Ernteguttransport so gestaltet, sodass derselbe effizient mit geringem Energiebedarf erfolgen kann.

Das Gutleitelement 15 ist als Rollprofilierungs-Element ausgeführt.

Bei der Rollprofilierung wird ein Zuschnittsblech für das Gutleitelement 15 umgeformt und oberflächenverfestigt. Dadurch verfügt das Gutleitelement 15 über eine erhöhte Härte und geringe Verschleißanfälligkeit.

Nach einer vorteilhaften Weiterbildung weist das Gutleitelement 15 zumindest am ersten Abschnitt 18, zweiten Abschnitt 19 und dritten Abschnitt 20 eine Verschleißschutzbeschichtung auf. Eine solche Verschleißschutzbeschichtung besteht vorzugsweise aus einer Wolfram-Karbid-Legierung, die über Laserpulverauftragsschweißen aufgebracht sein kann. Hiermit kann die Verschleißanfälligkeit des Gutleitelements 15 weiter reduziert werden.

Die Erfindung betrifft weiterhin ein Verfahren, um das oben beschriebene Häckselmesser 10 herzustellen. Bei der Herstellung des Häckselmessers 10 wird zunächst der Grundkörper 11 bereitgestellt, der den Befestigungsabschnitt 12 und den gegenüber dem Befestigungsabschnitt 12 abgewinkelten Schneidabschnitt 13 aufweist. Dies kann dadurch erfolgen, dass der Schneidabschnitt 13 gegenüber dem Befestigungsabschnitt 12 umgebogen wird. Ferner wird mindestens ein Gutleitelement 15 bereitgestellt, welches mit dem Grundkörper 11 verbunden wird. Das Gutleitelement 15 wird durch Rollprofilierung eines Blechzuschnitts aus Stahl umgeformt und in die oben beschriebene Kontur aus den neun Abschnitten 18 bis 26 gebracht. Dabei wird vorzugsweise der erste Abschnitt 18, der zweite Abschnitt 19 und der dritte Abschnitt 20 des Gutleitelements 15 mit einer Verschleißschutzbeschichtung beschichtet, vorzugsweise mit einer Wolfram-Karbid-Legierung. Der neunte Abschnitt 26 wird vorzugsweise mit dem zweiten Abschnitt 19 verschweißt.

### Bezugszeichenliste

- 10: Häckselmesser
- 11: Grundkörper
- 12: Befestigungsabschnitt
- 13: Schneidabschnitt
- 14: Übergangskante
- 15: Gutleitelement
- 16: Führungsfläche
- 17: Kante
- 18: erster Abschnitt
- 19: zweiter Abschnitt
- 20: dritter Abschnitt
- 21: vierter Abschnitt
- 22: fünfter Abschnitt
- 23: sechster Abschnitt
- 24: siebter Abschnitt
- 25: achter Abschnitt
- 26: neunter Abschnitt
- 27: Erntegutführung
- 28: Erntegutführung
- 29: Erntegutführung
- 30: Erntegutführung
- 31: Erntegutführung

## Patentansprüche

1. Häckselmesser (10) eines Feldhäckslers,
mit einem Grundkörper (11), der einen Befestigungsabschnitt (12) zur Befestigung des Häckselmessers (10) an einer Häckseltrommel und einen gegenüber dem Befestigungsabschnitt (12) abgewinkelten Schneidabschnitt (13) für zu häckselndes Erntegut aufweist,
mit mindestens einem an dem Befestigungsabschnitt (12) befestigten Gutleitelement (15) zur Führung von gehäckseltem Erntegut, wobei eine Führungsfläche (16) desselben eine zumindest abschnittsweise gekrümmte Kontur aufweist, die mit Abstand zur einer Übergangskante (14) zwischen dem Befestigungsabschnitt (12) und dem Schneidabschnitt (13) beginnt, **dadurch gekennzeichnet, dass**
ein Abstand (a) zwischen dem Beginn der Führungsfläche (16) des mindestens einen Gutleitelements (15) und der Übergangskante (14) zwischen dem Befestigungsabschnitt (12) und dem Schneidabschnitt (13) des Grundkörpers (11) zwischen 4 mm und 8 mm beträgt,
die Führungsfläche (16) des mindestens einen Gutleitelements (15) angrenzend an den Beginn derselben in einem ersten Abschnitt (18) mit einer Länge (b) zwischen 4 mm und 8 mm geradlinig verläuft, wobei der erste Abschnitt (18) des mindestens einen Gutleitelements (15) mit dem Befestigungsabschnitt (12) des Grundkörpers (11) einen Winkel (α) zwischen 18° und 22° einschließt,
der erste Abschnitt (18) des mindestens einen Gutleitelements (15) in einen konkav gewölbten zweiten Abschnitt (19) übergeht, dessen Krümmungsradius (Rx) zwischen 21 mm und 25 mm beträgt und der einen Umschlingungswinkel (β) zwischen 29° und 33° aufweist,
der zweite Abschnitt (19) des mindestens einen Gutleitelements (15) in einen konkav gewölbten dritten Abschnitt (20) übergeht, dessen Krümmungsradius (Ry) zwischen 18 mm und 22 mm beträgt und der einen Umschlingungswinkel (γ) zwischen 24° und 28° aufweist,
der dritte Abschnitt (20) des mindestens einen Gutleitelements in einen konvex gewölbten vierten Abschnitt (21) übergeht,
eine maximale Höhe (c) des Gutleitelements (15) ausgehend vom Befestigungsabschnitt (12) des Grundkörpers(11) zwischen 24 mm und 30 mm beträgt, wobei das mindestens eine Gutleitelement (15) ein Rollprofilierungs-Element ist.

2. Häckselmesser nach Anspruch 1, **dadurch gekennzeichnet, dass** der vierte Abschnitt (21) des mindestens einen Gutleitelements (15) einen Krümmungsradius (Rz) zwischen 5 mm und 7 mm aufweist, wobei der vierte Abschnitt (21) in einen fünften Abschnitt (22) der Führungsfläche (16) übergeht, der parallel zum Befestigungsabschnitt (12) des Grundkörpers (11) verläuft und der die maximale Höhe (c) des Gutleitelements (15) definiert.

3. Häckselmesser nach Anspruch 2, **dadurch gekennzeichnet, dass** der fünfte Abschnitt (22) des mindestens einen Gutleitelements (15) in einen geradlinig verlaufenden sechsten Abschnitt (23) übergeht, der mit dem Befestigungsabschnitt (12) des Grundkörpers (11) einen Winkel (δ) zwischen 23° und 27° einschließt.

4. Häckselmesser nach Anspruch 3, **dadurch gekennzeichnet, dass** das mindestens eine Gutleitelement (15) durch sich an den sechsten Abschnitt (23) anschließende Abschnitte (24, 25, 26) geschlossen ist.

5. Häckselmesser nach Anspruch 3 oder 4, **dadurch gekennzeichnet, dass** der sechste Abschnitt (23) des mindestens einen Gutleitelements (15) in einen konvex gekrümmten siebten Abschnitt (24) und der siebte Abschnitt (24) in einen geradlinig verlaufenden achten Abschnitt (25) übergeht, der an den Befestigungsabschnitt (12) des Grundkörpers (11) angrenzt.

6. Häckselmesser nach Anspruch 5, **dadurch gekennzeichnet, dass** der achte Abschnitt (25) des mindestens einen Gutleitelements (15) in einen neunten Abschnitt (26) übergeht, der den zweiten Abschnitt (19) des jeweiligen Gutleitelements (15) kontaktiert.

7. Häckselmesser nach Anspruch 6, **dadurch gekennzeichnet, dass** der neunte Abschnitt (26) mit dem zweiten Abschnitt (19) verschweißt ist.

8. Häckselmesser nach einem der Ansprüche 1 bis 7, **dadurch gekennzeichnet, dass** der erste Abschnitt (18), der zweite Abschnitt (19) und der dritte Abschnitt (20) des mindestens einen Gutleitelements (15) jeweils eine Verschleißschutzbeschichtung trägt.

9. Häckselmesser nach Anspruch 8, **dadurch gekennzeichnet, dass** die Verschleißschutzbeschichtung aus einer Wolfram-Karbid-Legierung besteht.

10. Verfahren zum Herstellen eines Häckselmessers nach einem der Ansprüche 1 bis 9, mit folgenden Schritten:
Bereitstellen des Grundkörpers (11), der den Befestigungsabschnitt (12) und den gegenüber dem Befestigungsabschnitt (12) abgewinkelten Schneidabschnitt (13) aufweist,
Bereitstellen des mindestens einen Gutleitelements (15),
Befestigen des mindestens einen Gutleitelements (15) an dem Grundkörper (11), **dadurch gekennzeichnet, dass** das mindestens eine Gutleitelement (15) durch Rollprofilierung eines Blechs bereitgestellt wird.

11. Verfahren nach Anspruch 10, **dadurch gekennzeichnet, dass** das mindestens eine Gutleitelement (15) zumindest an dem ersten Abschnitt (18), an dem zweiten Abschnitt (19) und an dem dritten Abschnitt (20) mit einer Verschleißschutzbeschichtung beschichtet wird.

## Claims

1. Chopping blade (10) of a forage harvester,
having a basic body (11), which has a fastening portion (12) for fastening the chopping blade (10) to a chopping drum and a cutting portion (13) which is angled in relation to the fastening portion (12) and is intended for harvested crop to be chopped,
having at least one crop-guiding element (15) which is fastened to the fastening portion (12) and is intended for guiding chopped harvested crop, wherein a guide surface (16) of said crop-guiding element has a contour which is curved at least in sections and begins at a distance from the one transition edge (14) between the fastening portion (12) and the cutting portion (13), **characterized in that**
a distance (a) between the beginning of the guide surface (16) of the at least one crop-guiding element (15) and the transition edge (14) between the fastening portion (12) and the cutting portion (13) of the basic body (11) is between 4 mm and 8 mm,
the guide surface (16) of the at least one crop-guiding element (15) runs rectilinearly adjacent to the beginning of said guide surface in a first portion (18) with a length (b) between 4 mm and 8 mm, wherein the first portion (18) of the at least one crop-guiding element (15) encloses an angle (α) between 18° and 22° with the fastening portion (12) of the basic body (11),
the first portion (18) of the at least one crop-guiding element (15) merges into a concavely curved second portion (19), the radius of curvature (Rx) of which is between 21 mm and 25 mm and which has a wrap angle (β) between 29° and 33°,
the second portion (19) of the at least one crop-guiding element (15) merges into a concavely curved third portion (20), the radius of curvature (Ry) of which is between 18 mm and 22 mm and which has a wrap angle (γ) between 24° and 28°,
the third portion (20) of the at least one crop-guiding element merges into a convexly curved fourth portion (21),
a maximum height (c) of the crop-guiding element (15) is between 24 mm and 30 mm starting from the fastening portion (12) of the basic body (11), wherein the at least one crop-guiding element (15) is a roll profiling element.

2. Chopping blade according to Claim 1, **characterized in that** the fourth portion (21) of the at least one crop-guiding element (15) has a radius of curvature (Rz) between 5 mm and 7 mm, wherein the fourth portion (21) merges into a fifth portion (22) of the guide surface (16), which fifth portion runs parallel to the fastening portion (12) of the basic body (11) and defines the maximum height (c) of the crop-guiding element (15).

3. Chopping blade according to Claim 2, **characterized in that** the fifth portion (22) of the at least one crop-guiding element (15) merges into a rectilinearly running sixth portion (23) which encloses an angle (δ) between 23° and 27° with the fastening portion (12) of the basic body (11).

4. Chopping blade according to Claim 3, **characterized in that** the at least one crop-guiding element (15) is closed by portions (24, 25, 26) adjoining the sixth portion (23).

5. Chopping blade according to Claim 3 or 4, **characterized in that** the sixth portion (23) of the at least one crop-guiding element (15) merges into a convexly curved seventh portion (24) and the seventh portion (24) into a rectilinearly running eighth portion (25) which is adjacent to the fastening portion (12) of the basic body (11).

6. Chopping blade according to Claim 5, **characterized in that** the eighth portion (25) of the at least one crop-guiding element (15) merges into a ninth portion (26) which makes contact with the second portion (19) of the respective crop-guiding element (15).

7. Chopping blade according to Claim 6, **characterized in that** the ninth portion (26) is welded to the second portion (19).

8. Chopping blade according to one of Claims 1 to 7, **characterized in that** the first portion (18), the second portion (19) and the third portion (20) of the at least one crop-guiding element (15) each bear a wear-protection coating.

9. Chopping blade according to Claim 8, **characterized in that** the wear-protection coating is composed of a tungsten-carbide alloy.

10. Method for producing a chopping blade according to one of Claims 1 to 9, having the following steps:
providing the basic body (11), which has the fastening portion (12) and the cutting portion (13) which is angled in relation to the fastening portion (12),
providing the at least one crop-guiding element (15), fastening the at least one crop-guiding element (15) to the basic body (11), **characterized in that** the at least one crop-guiding element (15) is provided by roll profiling of a metal sheet.

11. Method according to Claim 10, **characterized in that** the at least one crop-guiding element (15) is coated with a wear-protection coating at least on the first portion (18), on the second portion (19) and on the third portion (20).

## Revendications

1. Lame de hachage (10) d'une récolteuse-hacheuse, avec un corps de base (11) qui présente une section de fixation (12) pour la fixation de la lame de hachage (10) sur un tambour de hachage et une section de coupe (13) coudée par rapport à la section de fixation (12) pour le produit de récolte à hacher,
avec au moins un élément de conduite de produit (15) fixé à la section de fixation (12) pour guider le produit de récolte haché, une surface de guidage (16) de celui-ci présentant un contour courbé au moins par sections, qui commence à distance d'un bord de transition (14) entre la section de fixation (12) et la section de coupe (13), **caractérisée en ce que**
une distance (a) entre le début de la surface de guidage (16) de l'au moins un élément de conduite de produit (15) et le bord de transition (14) entre la section de fixation (12) et la section de coupe (13) du corps de base (11) est comprise entre 4 mm et 8 mm,
la surface de guidage (16) de l'au moins un élément de conduite de produit (15) s'étend de manière rectiligne, de manière adjacente au début de celle-ci, dans une première section (18) d'une longueur (b) comprise entre 4 mm et 8 mm, la première section (18) de l'au moins un élément de conduite de produit (15) formant un angle (α) compris entre 18° et 22° avec la section de fixation (12) du corps de base (11),
la première section (18) de l'au moins un élément de conduite de produit (15) se transformant en une deuxième section (19) à courbure concave, dont le rayon de courbure (Rx) est compris entre 21 mm et 25 mm et qui présente un angle d'enroulement (β) compris entre 29° et 33°,
la deuxième section (19) de l'au moins un élément de conduite de produit (15) se transformant en une troisième section (20) à courbure concave, dont le rayon de courbure (Ry) est compris entre 18 mm et 22 mm et qui présente un angle d'enroulement (γ) compris entre 24° et 28°,
la troisième section (20) de l'au moins un élément de conduite de produit se transformant en une quatrième section (21) à courbure convexe,
une hauteur maximale (c) de l'élément de conduite de produit (15) à partir de la section de fixation (12) du corps de base (11) étant comprise entre 24 mm et 30 mm, l'au moins un élément de conduite de produit (15) étant un élément de profilage par roulage.

2. Lame de hachage selon la revendication 1, **caractérisée en ce que** la quatrième section (21) de l'au moins un élément de conduite de produit (15) présente un rayon de courbure (Rz) compris entre 5 mm et 7 mm, la quatrième section (21) se transformant en une cinquième section (22) de la surface de guidage (16) qui s'étend parallèlement à la section de fixation (12) du corps de base (11) et qui définit la hauteur maximale (c) de l'élément de conduite de produit (15).

3. Lame de hachage selon la revendication 2, **caractérisée en ce que** la cinquième section (22) de l'au moins un élément de conduite de produit (15) se transforme en une sixième section (23) s'étendant de manière rectiligne, qui forme un angle (δ) compris entre 23° et 27° avec la section de fixation (12) du corps de base (11).

4. Lame de hachage selon la revendication 3, **caractérisée en ce que** l'au moins un élément de conduite de produit (15) est fermé par des sections (24, 25, 26) se raccordant à la sixième section (23).

5. Lame de hachage selon la revendication 3 ou 4, **caractérisée en ce que** la sixième section (23) de l'au moins un élément de conduite de produit (15) se transforme en une septième section (24) à courbure convexe et la septième section (24) en une huitième section (25) s'étendant de manière rectiligne, qui est adjacente à la section de fixation (12) du corps de base (11) .

6. Lame de hachage selon la revendication 5, **caractérisée en ce que** la huitième section (25) de l'au moins un élément de conduite de produit (15) se transforme en une neuvième section (26) qui est en contact avec la deuxième section (19) de l'élément de conduite de produit (15) respectif.

7. Lame de hachage selon la revendication 6, **caractérisée en ce que** la neuvième section (26) est soudée à la deuxième section (19).

8. Lame de hachage selon l'une quelconque des revendications 1 à 7, **caractérisée en ce que** la première section (18), la deuxième section (19) et la troisième section (20) de l'au moins un élément de conduite de produit (15) portent chacune un revêtement anti-usure.

9. Lame de hachage selon la revendication 8, **caractérisée en ce que** le revêtement anti-usure est constitué d'un alliage de carbure de tungstène.

10. Procédé de fabrication d'une lame de hachage selon l'une quelconque des revendications 1 à 9, avec les étapes suivantes :
la fourniture du corps de base (11), qui présente la section de fixation (12) et la section de coupe (13) coudée par rapport à la section de fixation (12),
la fourniture de l'au moins un élément de conduite de produit (15),
la fixation de l'au moins un élément de conduite de produit (15) sur le corps de base (11), **caractérisé en ce que** l'au moins un élément de conduite de produit (15) est fourni par profilage par roulage d'une tôle.

11. Procédé selon la revendication 10, **caractérisé en ce que** l'au moins un élément de conduite de produit (15) est revêtu d'un revêtement anti-usure au moins sur la première section (18), sur la deuxième section (19) et sur la troisième section (20).
